# EUROPÄISCHE PATENTSCHRIFT

(11) **EP 4 124 211 B1**
(45) Veröffentlichungstag und Bekanntmachung des Hinweises auf die Patenterteilung: **11.10.2023**
(21) Anmeldenummer: 22734483.5
(22) Anmeldetag: 01.06.2022
(51) Int. Cl.: G06F 3/16, G06F 40/30, G01C 21/36, B60R 16/037, G10L 15/06, G10L 15/18, G10L 15/22

(54) **VERFAHREN UND VORRICHTUNG ZUR ERZEUGUNG VON SPRACHAUSGABEN IN EINEM FAHRZEUG**
METHOD AND DEVICE FOR GENERATING VOICE OUTPUTS IN A VEHICLE
PROCÉDÉ ET DISPOSITIF DE GÉNÉRATION DE SORTIES VOCALES DANS UN VÉHICULE

(30) Priorität: 15.06.2021 DE 102021003074
(43) Veröffentlichungstag der Anmeldung: 01.02.2023
(73) Patentinhaber: Mercedes-Benz Group AG, 70372 Stuttgart (DE)
(72) Erfinder: BOTSCHEN, Teresa, 75382 Althengstett (DE); ULTES, Stefan, 71263 Weil der Stadt (DE)
(74) Vertreter: Novagraaf Group
(86) Internationale Anmeldenummer: PCT/EP2022/064948
(87) Internationale Veröffentlichungsnummer: WO 2022/263179

(56) Entgegenhaltungen:
- DE-A1-102015 213 722
- DE-A1-102018 200 746
- DE-A1-102018 215 293
- DE-A1-102019 217 751
- US-A1- 2014 324 429

## Beschreibung

Die Erfindung betrifft ein Verfahren zur Erzeugung von Sprachausgaben in einem Fahrzeug in Reaktion auf eine Spracheingabe, nach der im Oberbegriff von Anspruch 1 näher definierten Art. Außerdem betrifft die Erfindung eine Vorrichtung zur multimodalen sprachlichen Kommunikation mit den Nutzern eines Fahrzeugs nach der im Oberbegriff von Anspruch 10 näher definierten Art.

Sprachdialogsysteme sind beispielsweise in Fahrzeugen soweit aus dem Stand der Technik bekannt. Sie umfassen typischerweise eine Einrichtung zur Aufnahme von Sprache in der Umgebung, welche zumindest ein Mikrofon umfasst. Typischerweise ist es so, dass die Spracherkennung auf Knopfdruck oder über ein Codewort startet und die Spracheingabe entsprechend analysiert, um den gewollten Inhalt der Spracheingabe zu erkennen und über eine passende Aktion und/oder Sprachausgabe zu reagieren. Die EP 2 051 241 A1 beschreibt ein solches Sprachdialogsystem, bei dem über ein Sprachauswertesystem eine Spracheingabe ausgewertet und über ein Sprachausgabesystem Sprache in Reaktion auf die Eingabe ausgegeben wird. Dabei wird die Sprachausgabe zusätzlich entsprechend weiterer von einem Sensor erfasster Informationen in der Umgebung angepasst. Dies kann aber die Ausgabegeschwindigkeit, die Lautstärke oder dergleichen sein. Dies kann beispielsweise auch die geographische Position des Fahrzeugs, die Verkehrssituation oder dergleichen umfassen. Die über die Sensorik erfassten Informationen werden dann zur Anpassung der Sprachausgabe eingesetzt.

Die DE 10 2018 200746 offenbart ein Verfahren zur Erzeugung von Sprachausgaben in einem Fahrzeug in Reaktion auf eine Spracheingabe, wobei neben der Spracheingabe über wenigstens einen Sensor weitere Informationen erfasst werden, wonach eine Analyse der Spracheingabe und der Sensordaten erfolgt, die der Sprachausgabe zugrunde gelegt wird. Wenigstens ein bildgebender Sensor wird eingesetzt, mittels welchem der Fahrzeuginnenraum erfasst wird, wobei Objekte und/ oder Personen analysiert.

Die Aufgabe der hier vorliegenden Erfindung besteht nun darin, ein weiter verbessertes Verfahren und eine zur Durchführung des Verfahrens geeignete Vorrichtung anzugeben, welche eine verbesserte Erzeugung von Sprachausgaben in einem Fahrzeug ermöglicht. Erfindungsgemäß wird diese Aufgabe durch ein Verfahren mit den Merkmalen im Anspruch 1 gelöst. Vorteilhafte Ausgestaltungen und Weiterbildungen des erfindungsgemäßen Verfahrens ergeben sich aus den hiervon abhängigen Unteransprüchen. Im Anspruch 10 ist außerdem eine Vorrichtung zur multimodalen sprachlichen Kommunikation mit den Nutzern eines Fahrzeugs angegeben. Auch sie löst in Kombination mit dem Verfahren die Aufgabe.

Das erfindungsgemäße Verfahren dient zur Erzeugung von Sprachausgaben in einem Fahrzeug. Die Sprachausgaben erfolgen dabei als Reaktion auf eine Spracheingabe. Vergleichbar wie Stand der Technik erfolgt eine Analyse sowohl der Spracheingabe als auch zumindest einer über einen Sensor erfassten weiteren Information. Das Analyseergebnis wird dann der Sprachausgabe zugrunde gelegt. Erfindungsgemäß ist es so, dass wenigstens ein bildgebender Sensor eingesetzt wird. Über einen solchen bildgebenden Sensor wird der Fahrzeuginnenraum erfasst, wobei erfasste Objekte und/oder Personen analysiert und vorgegebenen Klassen zugeordnet werden. Diese Klassen dienen dann dazu, die Sprachausgabe, welche auf Basis des Analyseergebnisses der Spracheingabe erstellt wird, mit zu der entsprechenden Klasse passenden Stichworten oder Formulierungen anzureichern. Die passenden Stichworte sind dabei vorzugsweise semantisch mit der Sprachausgabe verbunden und der Klasse zugehörig gespeichert. Die Stichworte können dabei einzelne Worte, einen Satzteil oder vollständigen Satz umfassen.

Über das erfindungsgemäße Verfahren lässt sich so ein multimodales Sprachgenerierungssystem darstellen. Dieses kann dann auf eine Anfrage eines Nutzers, beispielsweise nach dem aktuellen Wetter, reagieren, indem es zum Beispiel die erwartete Ausgabe generiert und über das Wetter informiert. Beispielsweise kann eine solche Sprachausgabe den Inhalt "Es ist heute sonnig, das Wetter ist schön" enthalten. Zusätzlich kann über den bildgebenden Sensor, welcher insbesondere die Innenraumkamera des Fahrzeugs ist, ein Gegenstand wie beispielsweise ein Regenschirm in dem Fahrzeug durch entsprechende Bildanalyse erkannt worden sein. Dieser wird dann einer entsprechenden Klasse, hier zum Beispiel "Regenschirm" oder der weiteren Klasse "Regenschutz", zugeordnet. Die Sprachausgabe kann nun bei dem erfindungsgemäßen Verfahren angereichert werden, indem an die objektive Information über das Wetter beispielsweise der in der Klasse des Regenschutzes gespeicherte und mit der Sprachausgabe semantisch und/oder logisch verbundenen umfassende Satz angehängt wird "Deinen Regenschirm wirst du also nicht brauchen". Hierdurch wird dem Nutzer des Sprachgenerierungssystems das Gefühl einer "menschlichen" Kommunikation vermittelt, womit die Sprachsteuerung für den Nutzer quasi aufgewertet wird.

Weitere Klassen für Gegenstände könnten beispielsweise Taschen, mobile Endgeräte wie Smartphones oder dergleichen sein. Weitere Klassen können beispielsweise Personen umfassen, insbesondere die Anzahl an Personen, ob die Person erwachsen ist oder ein Kind ist oder dergleichen. All dies ermöglicht dann eine Sprachausgabe, welche über rein am Sprachinhalt orientierte Anreicherungen hinaus direkt auf den Nutzer bezogene Anreicherungen ermöglicht.

Gemäß einer weiteren sehr vorteilhaften Ausgestaltung des erfindungsgemäßen Verfahrens kann es dabei vorgesehen sein, dass eine semantische Analyse der Verbindung zwischen dem Analyseergebnis und den vorgegebenen, gespeicherten Klassen und/oder den Stichworten erfolgt, wobei die semantisch mit dem Analyseergebnis der Spracheingabe, d.h. mit der Sprachausgabe verbundenen Klassen und vorzugsweise in entsprechender Klasse semantisch mit dem Analyseergebnis der Spracheingabe verbundene Stichworte zur Anreicherung der Sprachausgabe verwendet werden. So kann beispielsweise die oben bereits beispielhaft angesprochene Klasse des Regenschutzes mit dem Thema Wetter verbunden werden oder entsprechende Klassen, welche Personen beinhalten, können beispielsweise mit Themen wie Suchen eines Restaurants/Hotels, Zimmerreservierungen/Tischreservierungen und dergleichen verbunden werden. Darüber hinaus werden bevorzugt in der zu der Sprachausgabe semantisch verbundenen Klasse zu der Sprachausgabe semantische passende Stichworte oder Sätze ausgewählt, d.h. beispielsweise bei einer schönes Wetter betreffenden Sprachausgabe wären die semantisch verbundenen Stichworte "Deinen Regenschirm wirst du also nicht brauchen"., bei einer schlechtes Wetter betreffenden Sprachausgabe wären hingegen die semantisch verbundenen Stichworte "Deinen Regenschirm wirst du brauchen".

Eine weitere sehr vorteilhafte Ausgestaltung des erfindungsgemäßen Verfahrens sieht es dabei ferner vor, dass den Klassen semantisch ähnliche Stichworte aus einer Datenbank zugeordnet und bei der Anreicherung der Sprachausgabe verwendet werden. So können beispielsweise der jeweiligen Klasse zu ihr passende Stichworte und/oder Formulierungen in einer Datenbank vorgehalten oder online abgefragt und der jeweiligen Klasse zugeordnet werden. Innerhalb der Datenbank kann dann bei einer entsprechenden erkannten Klasse aus den zu dieser Klasse passenden Stichworten und Formulierungen in der Datenbank geschöpft werden, um die Anreicherung der Sprachausgabe vorzunehmen.

Ohne dass hierauf im Detail weiter eingegangen werden muss, sollte für eine Fachperson in der Angelegenheit klar sein, dass die eigentliche Spracheingabe dabei in Textformat umgewandelt wird, um sie entsprechend zu analysieren. Auch die Sprachausgabe und die für sie erfindungsgemäß vorgesehenen Anreicherungen sind entsprechend dem Textformat gespeichert und hinterlegt und werden im Textformat miteinander kombiniert, um sie dann sprachlich auszugeben.

Gemäß einer besonders günstigen Ausgestaltung des erfindungsgemäßen Verfahrens ist dieses als selbstlernendes System ausgebildet. Es erfasst über seine Sensorik, und hier insbesondere wieder das Mikrophon und/oder die Innenraumkamera des Fahrzeugs, die verbale und/oder optische Reaktion auf die Sprachausgabe eines Fahrzeugnutzers und analysiert diese. Die Reaktion wird dann als positive oder negative Reaktion eingeordnet, um so festzustellen, ob die Anreicherung von der das System nutzenden Person als positiv, lustig, unterhaltsam oder dergleichen wahrgenommen worden ist, oder ob diese den Nutzer des Systems eher nervt und/oder stresst. Je nach Ergebnis werden dann die entsprechenden sprachlichen Anreicherungen angepasst. Bei positiver Rückmeldung werden zugehörige sprachliche Anreicherungen zukünftig verstärkt verwendet und bei negativer Rückmeldung zugehörige sprachliche Anreicherungen in Zukunft weniger, nicht mehr oder allenfalls mit sehr geringer Häufigkeit verwendet. Bevorzugt wird die Reaktion mittels einem Verfahren des maschinellen Lernens, beispielsweise einem neuronalen Netz, erlernt, so dass nutzerabhängig eine Reaktion auf eine Anreicherung oder auf eine Klasse von Anreicherung prädiziert werden kann. Das erfindungsgemäße Verfahren ermöglicht es so, dass das jeweilige multimodale Sprachgenerierungssystem sich seinem Nutzer anpasst und die Kommunikation mit dem Nutzer so gestaltet, dass der Nutzer dies als positiv und angenehm empfindet.

Gemäß einer weiteren sehr vorteilhaften Ausgestaltung des erfindungsgemäßen Verfahrens ist es so, dass die Sprachausgaben gespeichert werden, wobei eine neu erzeugte Sprachausgabe vor ihrer Ausgabe mit zumindest einer oder mehreren zuletzt gespeicherten Sprachausgaben in einer Klasse, welche der gleichen Semantik zugeordnet ist, verglichen wird. Falls eine Übereinstimmung vorliegt, wird die Sprachausgabe verworfen und durch eine andere ersetzt. In jeder Klasse der gleichen Semantik werden also die Sprachausgaben oder zumindest die Anreicherungen entsprechend gespeichert, um so einen Vergleich zu der letzten Ausgabe herstellen zu können. Dies ermöglicht es dem System, verschiedene Sprachausgaben zu generieren und insbesondere verschiedene Anreicherungen zu generieren, um nicht immer mit derselben Sprachausgabe und derselben Anreicherung zu kommunizieren, was die Kommunikation sehr vorhersehbar und damit für einen Nutzer langweilig und künstlich erscheinen lässt.

Insbesondere kann es dabei vorgesehen sein, dass für jede Klasse gleicher Semantik jeweils eine vorgegebene Anzahl der jüngsten Sprachausgaben gespeichert und bei dem Vergleich berücksichtigt wird. So können beispielsweise die letzten 10 bis 20 Sprachausgaben innerhalb der Klasse gleicher Semantik gespeichert werden, um frühestens nach dieser Anzahl eine erste mehr oder weniger wortidentische Wiederholung zuzulassen. Die Speicherung kann dabei so erfolgen, dass in einer Art Stapelspeicher jeweils die aktuellste Sprachausgabe entsprechend gespeichert wird und dafür die älteste Sprachausgabe in dem System entsprechend herausfällt bzw. gelöscht wird. Eine solche auch als first in first out bekannte Speichermethode ist für die Umsetzung dieser Ausgestaltung des erfindungsgemäßen Verfahrens ideal und ermöglicht es dem multimodalen Sprachgenerierungssystem eine Kommunikation zu führen, welche von einem Nutzer als realistisch und intelligent empfunden wird, was die Akzeptanz des Systems entsprechend erhöht.

Eine weitere außerordentlich günstige Weiterbildung des erfindungsgemäßen Verfahrens kann es dabei ferner vorsehen, dass zusätzlich eine Umgebungssituation des Fahrzeugs erfasst wird, wobei ein Grad der Anreicherung der Sprachausgabe in Abhängigkeit der Umgebungssituation, insbesondere der Verkehrssituation, um das Fahrzeug angepasst wird. Die Umgebungssituation umfasst beispielsweise Verkehrsdaten, Wetterdaten, Gefahrenobjekte erkannte Notsituationen. Die Umgebungssituation wird über Sensoren des Fahrzeugs und/oder über auf einem Fahrzeugdatenbus verfügbare Daten, beispielsweise über einen Server zur Verfügung gestellte Verkehrsinformationen oder Wetterinformationen ermittelt. Unter dem Grad der Anreicherung ist beispielsweise die Anzahl der Stichworte, Länge oder die Komplexität der durch die Stichworte gebildeten Sätze und/oder auch eine Unterscheidung zwischen informativen oder unterhaltsamen Informationen zu verstehen. So kann beispielsweise bei einer Fahrt auf einer mehrspurigen Straße mit viel fließendem Verkehr und häufigen Spurwechseln der Grad der Anreicherung sehr gering eingestellt sein oder auf eine Anreicherung gänzlich verzichtet werden. Die Kommunikation wird in dieser Situation, in welcher eine das Fahrzeug fahrende Person sich vor allem auf die Umgebung und den Verkehr konzentrieren muss, also auf ein absolutes Minimum und die Übermittlung der gewünschten Informationen in sehr sachlicher Weise beschränkt. Je weniger Aufmerksamkeit die Verkehrssituation benötigt, desto stärker und größer kann der Grad der Anreicherung ausfallen. Steht eine Person mit ihrem Fahrzeug beispielsweise im Stau, kann mit einem sehr hohen Grad der Anreicherung operiert werden, um hier einen Unterhaltungseffekt für die Person zu erzielen. Die Gefahr einer Ablenkung verursacht hier seltener eine sicherheitskritische Ablenkung als in der oben beschriebenen sehr komplexen Umgebungssituation.

Gemäß einer außerordentlich günstigen Weiterbildung des erfindungsgemäßen Verfahrens kann es daher vorgesehen sein, dass der Grad der Anreicherung von keiner Anreicherung über wenigstens eine Zwischenstufe bis hin zu einer starken Anreicherung reicht, wobei der Grad der Anreicherung je kleiner ist, desto komplexer sich die Umgebungssituation, und hier insbesondere wieder die Verkehrssituation, um das Fahrzeug herum darstellt.

Alternativ oder insbesondere ergänzend zu der Variation des Grads der Anreicherung anhand der Umgebungssituation kann der Nutzer auch eine Einstellung an einem Bedienelement vornehmen, um den Grad der Anreicherung zu bestimmen. Das Bedienelemente kann beispielsweise als ein Schieberegler, Drehregler oder als Touchdisplay ausgeführt sein, die jeweils eine Auswahlmöglichkeit von verschieden Stufen der Anreicherung umfassen, Dies gilt prinzipiell für jede Art der visuell basierten Anreicherung, kann aber insbesondere für eine Anreicherung ohne echten Informationsgehalt dienen, welche also nur der Unterhaltung dient. Diese Art der Anreicherung wird auch als ChitChat bezeichnet. Er kann dann beispielsweise über eine Menüeinstellung einen sachlichen Modus oder einen unterhaltsamen Modus einstellen, beispielsweise indem er über verschiedene Stufen oder den Schieberegler, insbesondere einem virtuellen Schieberegler, einen ihm angenehmen Grad der Anreicherung vorwählt. Dieser kann dann insbesondere mit der oben beschriebenen Ausführungsvariante bezüglich der Anreicherung in Abhängigkeit der Umgebungssituation kombiniert werden, sodass auch bei einem vorgewählten sehr unterhaltsamen Modus im Falle einer schwierigen Umgebungssituation, beispielsweise eines komplexen Verkehrsgeschehens, auf die unterhaltsamen Elemente ganz oder weitgehend verzichtet wird.

Die erfindungsgemäße Vorrichtung zur multimodalen sprachlichen Kommunikation mit den Nutzern eines Fahrzeugs umfasst dabei wenigstens ein Mikrofon zur Erfassung von Spracheingaben und umfasst wenigstens einen Sensor zur Erfassung weiterer Informationen. Die Vorrichtung weist ferner eine Sprachausgabe und wenigstens eine Steuerungseinrichtung für die genannten Komponenten auf. Die Steuerungseinrichtung kann dabei in mehrere Teile aufgeteilt sein oder auch Teil einer größeren Steuereinrichtung sein, welche zur Steuerung der genannten Komponenten nur in Teilen Verwendung findet.

Erfindungsgemäß ist es nun so, dass die Steuerungseinrichtung zur Durchführung eines Verfahrens in einer der oben genannten Ausgestaltungen eingerichtet ist. Wie bereits erwähnt kann es dabei vorgesehen sein, dass der wenigstens eine Sensor zumindest eine Innenraumkamera umfasst. Über eine solche Innenraumkamera können dann direkt die Personen und die ihnen zugeordneten Gegenstände, welche diese in das Fahrzeug gebracht haben, entsprechend erfasst und an die Steuerungseinrichtung zur Analyse und Zuordnung zu Klassen übermittelt werden. Die Steuerungseinrichtung erstellt die Sprachausgabe auf Basis des Analyseergebnisses der Spracheingabe und reichert diese mit zu einer der Klassen passenden Stichworten oder Formulierungen an. Unter passenden Stichworten sind mit der Sprachausgabe semantische verbundene Stichworte einer mit der Sprachausgabe semantische verbundenen Klasse zu verstehen.

Weitere vorteilhafte Ausgestaltungen und Weiterbildungen des erfindungsgemäßen Verfahrens sowie der Vorrichtung, welche insbesondere als Teil eins Fahrzeugs ausgebildet ein kann, ergeben sich auch aus dem Ausführungsbeispiel, welches nachfolgend unter Bezugnahme auf die Figuren näher beschrieben wird.

Dabei zeigen:
- Fig. 1: eine schematische Skizze eines multimodalen Sprachgenerierungssystems;
- Fig. 2 bis 5: verschiedene Anwendungsbeispiele für das System.

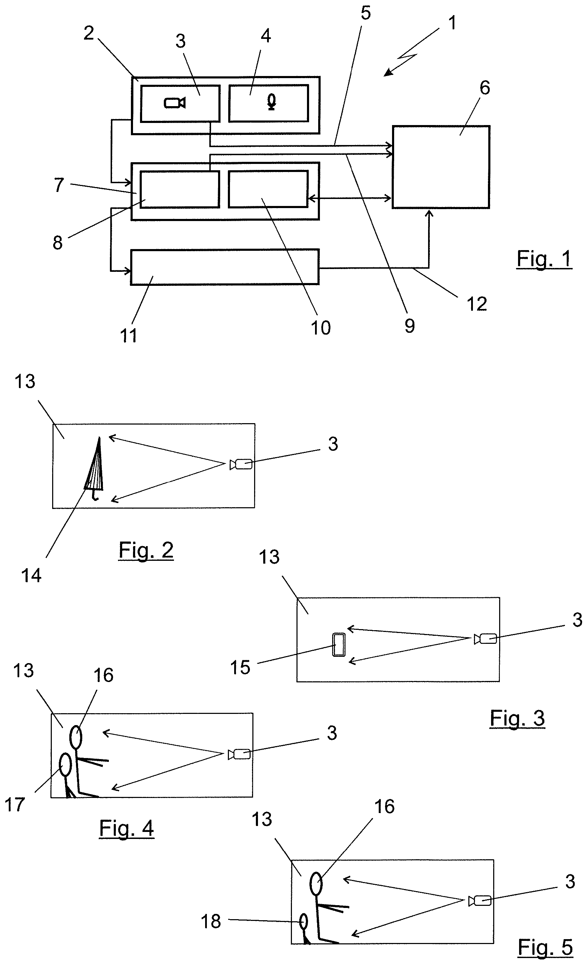

in der Darstellung der Figur 1 ist ein multimodales Sprachgenerierungssystem 1 in einer Übersicht skizziert, welches sich zur Durchführung des erfindungsgemäßen Verfahrens eignet. Das System 1 umfasst dabei ein Vorverarbeitungssystem 2, welches einen visuellen Sensor 3, hier eine Innenraumkamera eines Fahrzeugs, sowie ein Mikrofon 4 umfasst. Diese bilden einerseits eine visuelle Datenquelle, welche zur Detektion verschiedener Gegenstände genutzt werden kann. So können beispielsweise Regenschirme, Taschen, Handys, Erwachsene, Kinder, Hunde oder dergleichen erkannt werden. Diese auch als "Instanzen" bezeichneten Klassen sind dabei Gegenstände oder Personen, welche nicht zur Innenraumausstattung des Fahrzeugs gehören, also aktuell von den das Fahrzeug nutzenden Personen in das Fahrzeug eingebracht worden sind. Das Mikrofon 4 dient als sprachliche Datenquelle. Gesprochener Text kann als Spracheingabe identifiziert werden, beispielsweise nachdem ein Codewort gesagt worden ist, was bei der Anmelderin beispielsweise "Hey Mercedes" sein kann. Ergänzend oder alternativ dazu sind selbstverständlich auch andere Codewörter oder das Betätigen einer Taste zu Aktivierung der Spracheingabe möglich. Die aufgenommene sprachliche Äußerung des Nutzers wird dann in ein Textformat überführt und über eine entsprechende Texterkennung erkannt und hinsichtlich des Inhalts ausgewertet, wie dies bereits heute aus dem Stand der Technik bekannt ist. Beispielsweise kann eine Frage nach dem aktuellen Wetter gestellt worden sein, sodass hier also aus einer Analyse der sprachlichen Datenquelle eine Frage nach Wetterinformationen erkannt worden ist.

Gemäß der mit 5 bezeichneten Verbindung gelangen nun die parallel dazu erfassten visuellen Instanzen in einer Speicher 6, in welchen diese Instanzen im Textformat gespeichert werden. Der Speicher 6 verwaltet also eine Liste der Instanzen, beispielsweise Regenschirm, Handy oder dergleichen.

Angeregt durch das Vorverarbeitungssystem 2 erfolgt dann in einer Analyseeinheit 7 eine semantische Analyse der Verbindung zwischen der visuellen Situation, welche über die Innenraumkamera 3 als optischer Sensor erfasst worden ist, und die sprachliche über das Mikrofon 4 erfasste Äußerung des Nutzers. In einer Komponente 8 zur semantischen Anreicherung wird dann die Liste der Instanzen durchgegangen, wobei zu jeder Instanz semantisch ähnliche Stichworte oder Formulierungen, sogenannte Assoziationen, abgespeichert werden. Zum Beispiel kann für ein erkanntes Objekt "Regenschirm" als Stichwort Regen, Sonne, Sonnenschein, Schutz, Nass oder dergleichen abgespeichert werden. Die Stichworte lassen sich dabei durch eine semantische Suche in entsprechenden Wissensquellen generieren, beispielsweise in WordNet, Wikidata oder dergleichen. Zusätzlich können die in den Quellen hinterlegten Definitionen der Instanz hinzugezogen werden, beispielsweise zum Stichwort "Regenschirm" aus Wikidata: "Ein (Regen-) Schirm ist ein Baldachin zum Schutz vor Regen oder Sonnenlicht". Diese Stichworte und Informationen werden dann an den Speicher 6 weitergegeben, wie es hier durch den mit 9 bezeichneten Schritt angedeutet ist.

Eine weitere Komponente 10 der semantischen Analyseeinheit 7 dient zur Evaluation hinsichtlich Übereinstimmungen. Diese Komponente 10 evaluiert dabei kontinuierlich die situationsbezogene Übereinstimmung zwischen neu geäußerten Inhalten und den visuellen Instanzen im Speicher 6. Ein Beispiel könnte hier sein, dass die Äußerung "Hey Mercedes, wie ist das Wetter?" ist mit dem Inhalt "Frage nach Wetterinformationen" verknüpft ist. Nun ergibt sich anhand der Stichworte im Speicher 6 eine hohe semantische Ähnlichkeit mit der zuvor dargestellten Regenschirm-Instanz. Die semantische Analyseeinheit 7 meldet dann einem Sprachgenerierungsmodul 11, dass für das oben genannte Beispiel der Regenschirm in die Antwort einbezogen werden kann. In dem Sprachgenerierungsmodul 11 wird dann die sprachliche Antwort im Textformat generiert, welche dann in an sich bekannter Weise über eine Umwandlung in Sprache umgewandelt und ausgegeben wird.

Die einfachste Ausführung selektiert dabei vordefinierte Antwortsätze, die die passende Instanz beinhalten. Für mehr Variationen kann durch einen Sprachgenerierungsansatz auch ein neuer Antwortsatz generiert werden, der auf die jeweilige Instanz Bezug nimmt. In einem mit 12 bezeichneten Schritt wird dann an den Speicher 6 weitergegeben, welche der visuellen Instanzen mit welcher Formulierung verwendet wurden. So können Dopplungen innerhalb relativ kurzfristig aufeinanderfolgender Sprachausgaben mit Bezug zu denselben Instanzen vermieden werden.

Durch das System 1 werden so ein vergrößertes Spektrum an hilfreichen Informationen, die dem Nutzer sprachlich mitgeteilt werden können, zur Verfügung gestellt. Durch die Bildanalyse über die Innenraumkamera 3 sind dabei Kontextinformationen zugänglich, die aus der Sprachanalyse alleine so nicht hätten generiert werden können. Beispielsweise erkennbare Eigenschaften von Personen in dem Fahrzeug, beispielsweise ob es sich um einen Erwachsenen oder ein Kind handelt. Diese zusätzlichen Informationen können dann in die Bearbeitung der sprachlich mitgeteilten Befehle mit einbezogen werden. Dies führt zu einer Erhöhung der wahrgenommenen Natürlichkeit des Dialogs, außerdem lassen sich ChitChat-Elemente, also sprachliche Anreicherungen ohne unmittelbaren Informationsgehalt, einbeziehen, um den Dialog entsprechend aufzulockern, insbesondere wenn es die Umgebungssituation um das Fahrzeug zulässt, ohne die Konzentration des Nutzers auf den Verkehr zu beeinträchtigen. Dies führt insgesamt zu einer erhöhten wahrgenommenen Intelligenz des Systems 1, was letztlich auch die Natürlichkeit des Dialogs fördert und damit letztlich die Akzeptanz des Systems 1 beim Nutzer erhöht.

Anhand der nachfolgenden Figuren 2 bis 5 sollen nun einige Situationen bezüglich ihrer sprachlichen Anreicherung anhand konkreter Beispiele erläutert werden.

So können gemäß einer ersten Möglichkeit reine Unterhaltungselemente mit visuellen Bezügen als Anreicherung generiert werden. Ein Beispiel könnte hier die in Figur 2 dargestellte Situation bieten. Dabei ist die Kamera 3 innerhalb eines in seiner Gesamtheit mit 13 bezeichneten Fahrzeuginnenraums zu erkennen. Über die Kamera 3 wird als Objekt ein mit 14 bezeichneter Regenschirm erkannt. Auf eine Frage nach dem Wetter, wie es oben bereits als Beispiel dargelegt worden ist, könnte die Sprachausgabe nun als notwendigen Teil die Ausgabe "Die Sonne scheint" beinhalten und könnte als Anreicherung mit Bezugnahme auf den Regenschirm 14 als Instanz hinzufügen "Du wirst deinen Regenschirm nicht benötigen". Dies wäre ein Beispiel für ein reines Unterhaltungselement, welches aber durch das Einbeziehen des über den visuellen Sensor in Form der Kamera 3 erkannten Regenschirms 14 sehr natürlich wirkt.

In der Darstellung der Figur 3 ist nun eine andere Situation dargestellt. Durch die Innenraumkamera 3 wird im Innenraum 13 des Fahrzeugs beispielsweise ein offen in der Mittelkonsole liegendes Handy 15 erkannt. In einer Situation, in welcher über die Spracheingabe und das Mikrofon 4 der Befehl "Bitte Parke das Fahrzeug" ausgegeben wird, wird dann dieser Befehl ausgeführt und das Fahrzeug entsprechend geparkt. Gleichzeitig kann als Sprachausgabe eine hilfreiche Information an den Nutzer ausgegeben werden, indem dieser darauf hingewiesen wird "Vorsicht, dein Handy liegt sichtbar in der Mittelkonsole". Der Nutzer kann hier also darauf hingewiesen werden, dass er nach dem Parken, falls er das Fahrzeug verlässt, sein Handy nicht vergisst oder zumindest es so in dem Fahrzeug positioniert, dass es von außen nicht gesehen werden kann, um so die Gefahr von Vandalismus und Diebstahl aufgrund des im Fahrzeug erkennbaren Handys zu verhindern.

Eine weitere denkbare Möglichkeit besteht darin, dass über Objekte hinaus auch Personen mit einbezogen werden. Dies kann beispielsweise die Reservierung in einem Restaurant umfassen. In der Darstellung der Figur 4 sollen sich in dem Fahrzeuginnenraum 13 zwei von der Innenraumkamera 3 erkannte Personen befinden, eine das Fahrzeug fahrende Person 16 sowie eine auf einem Beifahrersitz befindliche Person 17. Beide Personen werden als Erwachsene erkannt und entsprechenden Klassen zugeordnet. Auf einen Sprachbefehl "Navigiere zu einem Restaurant" könnte nun beispielsweise eine Sprachausgabe in der Art erfolgen, dass angegeben wird, "Ja gerne, ich mache eine Reservierung für zwei Personen im Restaurant XY". Das System 1 kann also auf die in dem Fahrzeug befindlichen Personen 16, 17 unmittelbar reagieren und ohne weitere Aufforderung eine mit den Personen bzw. ihrer Anzahl und/oder Eigenschaft zusammenhängende weitere Aktion ausführen oder zumindest anbieten.

Ein alternatives Szenario ist in der Darstellung der Figur 5 zu erkennen. Der einzige Unterschied zum Szenario in Figur 4 ist nun, dass anstelle einer erwachsenen Person 17 ein Kind 18 erkannt worden ist. In derselben Situation, in welcher der Sprachbefehl "Navigiere zu einem Restaurant" erteilt wird, könnte nun die Antwort lauten "OK, ich suche ein kinderfreundliches Restaurant". Das System 1 geht hier also wieder auf die konkrete durch den visuellen Sensor in Form der Innenraukamera 3 erfassten Situation ein und reagiert für den Nutzer vermeintlich "intelligent und menschenähnlich" auf die entsprechende Situation und die Spracheingabe. Um den Nutzer die Möglichkeit einer Reaktion anzubieten könnte die Sprachausgabe auch als Frage formuliert werden "ok, soll och ein kinderfreundliches Restaurant suchen?" auf die der Nutzer dann z.B. mit "ja, gerne" antworten könnte.

## Patentansprüche

1. Verfahren zur Erzeugung von Sprachausgaben in einem Fahrzeug in Reaktion auf eine Spracheingabe, wobei neben der Spracheingabe über wenigstens einen Sensor (3) weitere Informationen erfasst werden, wonach eine Analyse der Spracheingabe und der Sensordaten erfolgt, die der Sprachausgabe zugrunde gelegt wird,
**dadurch gekennzeichnet, dass**
wenigstens ein bildgebender Sensor (3) eingesetzt wird, mittels welchem der Fahrzeuginnenraum (13) erfasst wird, wobei Objekte (14, 15) und/oder Personen (16, 17, 18) analysiert und vorgegebenen Klassen zugeordnet werden, und wobei die Sprachausgabe auf Basis des Analyseergebnisses der Spracheingabe erstellt und mit zu einer der Klassen passenden Stichworten oder Formulierungen angereichert wird.

2. Verfahren nach Anspruch 1,
**dadurch gekennzeichnet, dass**
eine semantische Analyse der Verbindung zwischen dem Analyseergebnis der Spracheingabe und den Klassen erfolgt, wobei semantisch mit dem Analyseergebnis der Spracheingabe verbundene Klassen und/oder Stichworte zur Anreicherung der Sprachausgabe verwendet werden.

3. Verfahren nach Anspruch 2,
**dadurch gekennzeichnet, dass**
den Klassen semantisch ähnliche Stichworte aus einer Datenbank zugeordnet und bei der Anreicherung der Sprachausgabe verwendet werden.

4. Verfahren nach einem der Ansprüche 1 bis 3.
**dadurch gekennzeichnet, dass**
die verbale und/oder optische Reaktion eines Nutzers auf die Sprachausgabe erfasst und analysiert wird, die Reaktion als positive oder negative Reaktion eingeordnet und die sprachlichen Anreicherungen dieser Einordnung angepasst werden.

5. Verfahren nach einem der Ansprüche 1 bis 4,
**dadurch gekennzeichnet, dass**
die Sprachausgaben gespeichert werden, wobei eine neu erzeugte Sprachausgabe vor der Ausgabe mit zumindest einer zuletzt gespeicherten Sprachausgabe in einer Klasse gleicher Semantik verglichen und für den Fall einer weitgehenden Übereinstimmung verworfen wird.

6. Verfahren nach Anspruch 5.
**dadurch gekennzeichnet, dass**
für jede Klasse gleicher Semantik jeweils eine vorgegebene Anzahl der jüngsten Sprachausgaben gespeichert wird.

7. Verfahren nach einem der Ansprüche 1 bis 6,
**dadurch gekennzeichnet, dass**
zusätzlich eine Umgebungssituation des Fahrzeugs über Sensoren und/oder über einen Server zur Verfügung gestellte Daten erfasst wird, wobei ein Grad der Anreicherung der Sprachausgabe in Abhängigkeit der Umgebungssituation um das Fahrzeug angepasst wird.

8. Verfahren nach Anspruch 7,
**dadurch gekennzeichnet, dass**
der Grad der Anreicherung von keiner Anreicherung über wenigstens eine Zwischenstufe hin bis zu einer starken Anreicherung reicht, wobei der Grad der Anreicherung desto kleiner ist, je komplexer sich die Umgebungssituation darstellt.

9. Verfahren nach einem der Ansprüche 1 bis 8,
**dadurch gekennzeichnet, dass**
der Grad der Anreicherung über eine Einstellung eines Nutzers an einem Bedienelement vorgewählt werden kann.

10. Vorrichtung zur multimodalen sprachlichen Kommunikation mit einem Nutzer (16, 17, 18) eines Fahrzeugs, mit wenigstens einem Mikrofon (4) zur Erfassung von Spracheingaben, mit wenigstens einem Sensor (3) zur Erfassung weiterer Informationen, mit wenigstens einer Sprachausgabe, und mit wenigstens einer Steuerungseinrichtung,
**dadurch gekennzeichnet, dass**
die Steuerungseinrichtung zur Durchführung eines Verfahrens nach einem der Ansprüche 1 bis 9 eingerichtet ist.

## Claims

1. Method for generating voice outputs in a vehicle in response to a voice input, in addition to the voice input, further information being detected via at least one sensor (3), after which an analysis of the voice input and the sensor data is carried out, on which analysis the voice output is based,
**characterized in that**
at least one imaging sensor (3) is used, by means of which the vehicle interior (13) is detected, with objects (14, 15) and/or persons (16, 17, 18) being analyzed and associated with predefined classes, and the voice output being generated on the basis of the analysis result of the voice input and being enriched with keywords or formulations that match one of the classes.

2. Method according to claim 1,
**characterized in that**
the link between the analysis result of the voice input and the classes is semantically analyzed, with classes and/or keywords semantically linked to the analysis result of the voice input being used to enrich the voice output.

3. Method according to claim 2,
**characterized in that**
semantically similar keywords from a database are associated with the classes and used to enrich the voice output.

4. Method according to any of claims 1 to 3.
**characterized in that**
the verbal and/or visual response of a user to the voice output is detected and analyzed, the reaction is classified as a positive or negative response and the linguistic enrichments are adapted to this classification.

5. Method according to any of claims 1 to 4,
**characterized in that**
the voice outputs are stored, with a newly generated voice output being compared, before the output, with at least one last stored voice output in a class with the same semantics and being discarded in the event of extensive consistency.

6. Method according to claim 5.
**characterized in that**
a predefined number of the most recent voice outputs is stored for each class with the same semantics.

7. Method according to any of claims 1 to 6,
**characterized in that**
an environment situation of the vehicle is additionally detected via sensors and/or data provided via a server, with a degree of enrichment of the voice output being adapted on the basis of the environment situation surrounding the vehicle.

8. Method according to claim 7,
**characterized in that**
the degree of enrichment ranges from no enrichment to at least one intermediate stage to a high degree of enrichment, the degree of enrichment being smaller the more complex the environment situation is.

9. Method according to any of claims 1 to 8,
**characterized in that**
the degree of enrichment can be preselected via an adjustment by a user on an operating element.

10. Device for multi-modal linguistic communication with a user (16, 17, 18) of a vehicle, comprising at least one microphone (4) for detecting voice inputs, comprising at least one sensor (3) for detecting further information, comprising at least one voice output, and comprising at least one control device,
**characterized in that**
the control device is designed to carry out a method according to any of claims 1 to 9.

## Revendications

1. Procédé permettant de générer des sorties vocales dans un véhicule en réponse à une entrée vocale, dans lequel, outre l'entrée vocale, d'autres informations sont détectées par l'intermédiaire d'au moins un capteur (3), après quoi une analyse de l'entrée vocale et des données de capteur est effectuée, laquelle analyse est utilisée en tant que base pour la sortie vocale,
**caractérisé en ce que**
au moins un capteur (3) d'imagerie est utilisé, au moyen duquel l'espace intérieur de véhicule (13) est détecté, dans lequel des objets (14, 15) et/ou des personnes (16, 17, 18) sont analysés et associés à des classes prédéfinies, et dans lequel la sortie vocale est créée sur la base du résultat d'analyse de l'entrée vocale et enrichie avec des mots-clés ou des formulations appropriés à l'une des classes.

2. Procédé selon la revendication 1,
**caractérisé en ce que**
une analyse sémantique du lien entre le résultat d'analyse de l'entrée vocale et les classes est effectuée, dans lequel des classes et/ou mots-clés liés de manière sémantique au résultat d'analyse de l'entrée vocale sont utilisés pour l'enrichissement de la sortie vocale.

3. Procédé selon la revendication 2,
**caractérisé en ce que**
des mots-clés similaires de manière sémantique et provenant d'une base de données sont associés aux classes et utilisés pour l'enrichissement de la sortie vocale.

4. Procédé selon l'une des revendications 1 à 3.
**caractérisé en ce que**
la réponse verbale et/ou visuelle d'un utilisateur à la sortie vocale est détectée et analysée, la réponse est classifiée comme une réponse positive ou négative et les enrichissements linguistiques sont adaptés à ladite classification.

5. Procédé selon l'une des revendications 1 à 4,
**caractérisé en ce que**
les sorties vocales sont mémorisées, dans lequel une sortie vocale nouvellement générée est comparée, avant la sortie, avec au moins une dernière sortie vocale mémorisée dans une classe de même sémantique et rejetée en cas de concordance considérable.

6. Procédé selon la revendication 5.
**caractérisé en ce que**
pour chaque classe de même sémantique, respectivement un nombre prédéfini de sorties vocales récentes est mémorisé.

7. Procédé selon l'une des revendications 1 à 6,
**caractérisé en ce que**
en outre, une situation environnante du véhicule est détectée par l'intermédiaire de capteurs et/ou par l'intermédiaire de données mises à disposition par un serveur, dans lequel un degré d'enrichissement de la sortie vocale est adapté en fonction de la situation environnante autour du véhicule.

8. Procédé selon la revendication 7,
**caractérisé en ce que**
le degré d'enrichissement va de l'absence d'enrichissement, en passant par au moins une étape intermédiaire, jusqu'à un enrichissement important, dans lequel plus le degré d'enrichissement est faible, plus la situation environnante est complexe.

9. Procédé selon l'une des revendications 1 à 8,
**caractérisé en ce que**
le degré d'enrichissement peut être présélectionné par l'intermédiaire d'un réglage d'un utilisateur sur un élément de manipulation.

10. Dispositif permettant la communication linguistique multimodale avec un utilisateur (16, 17, 18) d'un véhicule, comportant au moins un microphone (4) pour la détection d'entrées vocales, comportant au moins un capteur (3) pour la détection d'autres informations, comportant au moins une sortie vocale, et comportant au moins un appareil de commande,
**caractérisé en ce que**
l'appareil de commande est configuré pour la mise en oeuvre d'un procédé selon l'une des revendications 1 à 9.
